## Europäisches Patentamt

## European Patent Office

## Office européen des brevets

(19)

(11) Numéro de publication: **0 265 351 B1**

(12) **FASCICULE DE BREVET EUROPEEN**

(45) Date de publication du fascicule du brevet:
**14.03.90**

(51) Int. Cl.⁴: **B22D 11/14, F16J 15/40**

(21) Numéro de dépôt: **87420257.5**

(22) Date de dépôt: **24.09.87**

(54) **Dispositif permettant l'introduction d'un fluide dans la chambre de refroidissement d'un moule rotatif.**

(30) Priorité: **25.09.86 FR 8613560**

(43) Date de publication de la demande:
**27.04.88 Bulletin 88/17**

(45) Mention de la délivrance du brevet:
**14.03.90 Bulletin 90/11**

(84) Etats contractants désignés:
**AT DE ES GB IT**

(56) Documents cités:
**FR-A- 2 104 941**
**GB-A- 1 129 739**
**US-A- 3 367 400**

(73) Titulaire: **VALLOUREC INDUSTRIES, 7, place du Chancelier Adenauer, F-75016 Paris(FR)**

(72) Inventeur: **Peytavin, Pierre, 41 Boulevard de la Saussaye, F-92200 Neuilly-sur-Seine(FR)**

(74) Mandataire: **Desolneux, Jean-Paul Charles, 130 rue de Silly BP 413, F-92103 Boulogne-Billancourt Cédex(FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

Le dispositif suivant la revendication 1 et le procédé suivant la revendication 7, qui font l'objet de l'invention, concernent le refroidissement des moules rotatifs utilisés pour la coulée de liquides portés à des températures élevées. Ce dispositif et ce procédé concernent en particulier les moules utilisés pour la coulée continue rotative de métaux ou alliages, tels que les aciers, en vue d'obtenir des billettes pleines ou creuses.

Il est connu de réaliser autour d'un moule rotatif une chambre de refroidissement dont la paroi extérieure, solidaire de ce moule, est raccordée avec une arrivée de fluide grâce à des dispositifs d'introduction de ce fluide.

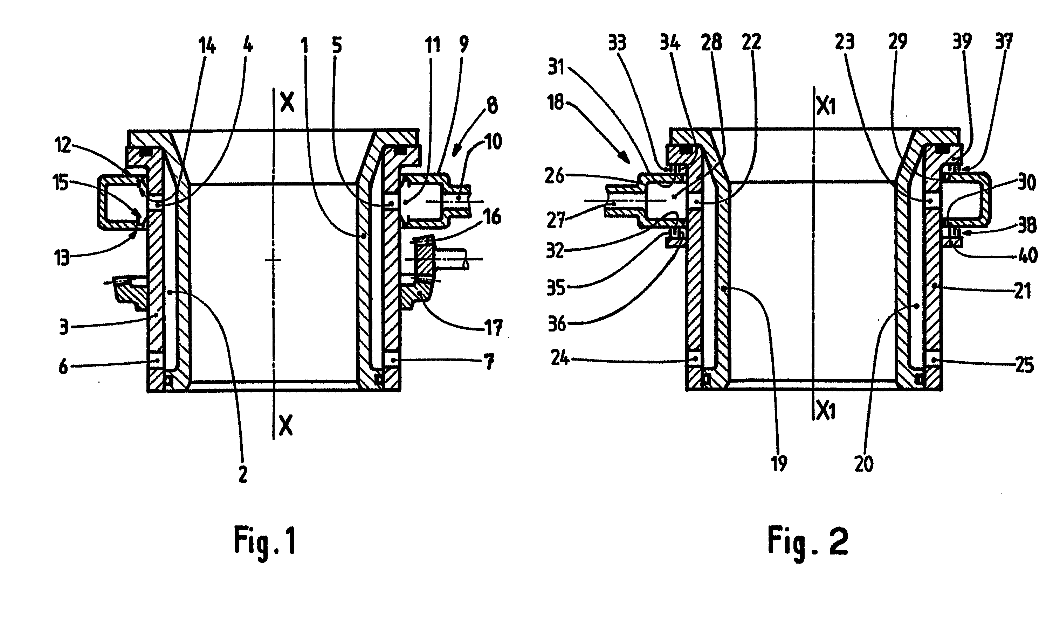

Les figures 1 et 2 représentent deux exemples connus de dispositif d'introduction de fluide dans une chambre de refroidissement.

Figure 1: Dispositif connu d'introduction de fluide dans la chambre de refroidissement d'un moule rotatif comportant des joints d'étanchéité dynamiques.

Figure 2: Dispositif connu d'introduction de fluide dans la chambre de refroidissement d'un moule rotatif comportant un joint à fuite contrôlée par labyrinthe.

La figure 1 représente un dispositif connue de refroidissement d'un moule rotatif (1) qui tourne autour d'un axe (X–X), utilisé pour la coulée continue rotative de l'acier. Les moyens d'introduction de l'acier à la partie supérieure et d'extraction de la billette en cours de solidification à la partie inférieure sont connus et non représentés.

Dans le cas de la figure, le moule est de révolution autour de l'axe (X–X). La chambre de refroidissement (2) est formée par l'espace annulaire compris entre la paroi du moule (1) et une paroi extérieure (3), de révolution, qui l'entoure. Cette paroi extérieure (3) comporte des orifices d'entrée de fluide tels que (4,5), également répartis suivant une circonférence d'axe (X–X), au voisinage de son extrémité supérieure et des orifices de sortie (6, 7) de fluide disposés au voisinage de son extrémité inférieure.

Le dispositif d'introduction de fluide (8) comprend une boîte annulaire (9) fixe, montée de façon connue sur un support non représenté. Cette boîte (9) de révolution entoure la paroi extérieure (3) à la hauteur des orifices d'entrée (4, 5) de fluide. La boîte (9) est reliée par au moins une entrée telle que (10) à une canalisation d'arrivée de fluide de refroidissement de façon connue et non représentée. La boîte (9) comporte un orifice de sortie annulaire (11) de révolution disposé en face des orifices d'entrée tels que (4, 5) de la chambre de refroidissement (2).

Les deux bords (12, 13) de l'orifice de sortie (11) comportent chacun un joint à lèvre (14, 15). Ces joints viennent en appui glissant sur la surface de révolution de la paroi extérieure (3), respectivement au-dessus et au-dessous des orifices tels que (4, 5). Ils sont orientés de façon à empêcher le passage à l'extérieur du fluide qui traverse l'espace qui sépare l'orifice de sortie (11) des orifices d'entrée tels que (4, 5).

On peut ainsi introduire dans la chambre de refroidissement (2) un fluide, tel que de l'eau, à partir de la boîte annulaire (9) sans observer de pertes de fluide importantes. Ce dispositif d'introduction de fluide (8) a cependant le sérieux inconvénient de freiner très fortement la rotation du moule autour de l'axe (X–X) à cause du frottement exercé par les deux joints à lèvre sur toute l'étendue de leur zone de contact annulaire avec la paroi (3). Ce frottement est d'autant plus grand que la pression est plus élevée. Il est donc nécessaire, pour entraîner en rotation le moule à la vitesse voulue, d'utiliser un moyen d'entraînement relativement puissant, comportant par exemple un mécanisme à pignon conique (16) qui engrène, sur une couronne dentée (17) montée autour de la paroi (3), un moteur ou une transmission mécanique non représenté entraînant en rotation, de façon connue, le pignon (16). Ce mécanisme entraîne une augmentation des prix de construction et des frais d'entretien de la machine de coulée.

Une autre forme de réalisation d'un dispositif d'introduction de fluide dans la chambre de refroidissement est montrée par le FR 2 104 941 sur lequel les préambules des revendications 1 et 7 sont basés et qui décrit un dispositif de refroidissement d'une machine de coulée horizontale de tuyaux métalliques par centrifugation.

L'eau pénètre dans la chambre de refroidissement en rotation par une couronne annulaire fixe qui comporte un joint d'étanchéité à frottement assurant l'étanchéité entre cette couronne et une collerette annulaire solidaire de la chambre. Le FR 2 104 941 donne les inconvénients d'un tel joint (usure du joint, puissance inutile consommée pour la rotation, inertie de mise en rotation) et essaye d'améliorer le système par introduction d'une chambre de compensation permettant de diminuer la force de frottement du joint d'étanchéité.

Un système analogue est prévu pour la sortie de l'eau de la chambre.

On retrouve bien ici ce qui a été expliqué précédemment pour le dispositif de la figure 1.

La figure 2 représente un dispositif d'introduction de fluide (18) qui permet d'éviter la création d'un important couple résistant s'opposant à la rotation d'un moule rotatif (19) et permet de simplifier la construction de la machine de coulée, la barre pouvant entraîner la lingotière par frottement. Comme dans le cas de la figure 1, le moule rotatif (19) d'axe (XI–XI) est entouré d'une chambre de refroidissement (20) dont la paroi extérieure (21) comporte des orifices d'entrée de fluide tels que (22, 23) répartis suivant une circonférence d'axe (XI–XI) au voisinage de son extrémité supérieure. Des orifices de sortie tels que (24, 25) sont disposés au voisinage de l'extrémité inférieure de cette paroi (21). Le dispositif d'introduction de fluide (18) comporte une boîte annulaire (26), fixe, alimentée en fluide par au moins un orifice d'entrée (27) relié à une canalisation d'arrivée de fluide non représentée. La boîte (26) comporte un orifice de sortie annulaire (28) disposé en face des orifices d'entrée de fluide tels que (22, 23) de la chambre de refroidissement. Les deux bords (29, 30) de cet orifice (28) sont munis de chicanes fixes, respectivement (31, 32) qui coopèrent chacune avec un groupe de deux chicanes entraînées en rotation, respectivement (33, 34 et 35, 36) de façon à former un labyrinthe, respectivement (37, 38).

Chacun de ces deux groupes de chicanes entraînées en rotation est monté sur une bride, respectivement (39, 40), solidaire de la paroi extérieure (21), respectivement au-dessus et au-dessous des orifices d'entrée tels que (22, 23). Ces labyrinthes (37, 38) jouent le rôle de joints à fuite limitée de fluide. La fuite est d'autant plus faible qu'il est possible de réaliser un faible jeu entre chicanes fixes et chicanes mobiles. Dans la pratique, les nécessités opératoires imposent des jeux de plusieurs dixièmes de millimètres entre chicanes fixes et chicanes mobiles. Compte tenu du grand diamètre des brides (39, 40) sur lesquelles sont montés ces labyrinthes, diamètre qui est le plus souvent de 300 à 700 mm et de la pression de fluide de refroidissement qui est le plus couramment de l'eau, la perte de fluide est couramment de 20 à 25 % de la quantité de fluide mise en oeuvre. Cette perte est extrêmement gênante car elle se produit tout autour de l'installation de coulée et la récupération des fuites est souvent difficile. De plus, il peut arriver que des particules solides soient entraînées par le fluide de refroidissement et viennent se coincer entre chicanes fixes et mobiles. Un tel incident peut provoquer le blocage de la rotation du moule, annulant ainsi tout le bénéfice de la simplicité dû à l'entraînement en rotation par la barre elle-même. On a recherché la possibilité de concevoir un dispositif d'introduction de fluide dans la chambre de refroidissement d'un moule rotatif qui permette la rotation de ce moule sans freinage notable par des joints glissants tels que par exemple des joints à lèvre et qui permette aussi de réduire au minimum les pertes de fluide au niveau des orifices d'entrée dans la chambre de refroidissement. On a cherché aussi la possibilité d'éviter les risques de blocage de la rotation du moule par des particules transportées par le fluide venant se coincer entre les parties mobiles d'un tel dispositif, permettant de réaliser l'introduction du fluide dans la chambre de refroidissement.

Le dispositif qui fait l'objet de l'invention pour l'introduction d'un fluide de refroidissement dans la chambre de refroidissement d'un moule rotatif utilisé pour la coulée de liquides portés à des températures élevées, tels que des métaux ou alliages, sans exercer de freinage sensible du mouvement de rotation du moule et sans risques de blocage de celui-ci permet aussi de limiter à un très faible niveau les pertes de fluide au voisinage des orifices d'entrée du fluide dans la chambre de refroidissement. Ce dispositif s'applique au refroidissement d'un moule rotatif tournant autour d'un axe de rotation, comportant une chambre de refroidissement formée par l'espace annulaire compris entre la paroi du moule et une paroi extérieure qui l'entoure. Il comprend des orifices d'entrée de fluide répartis annulairement autour de la paroi extérieure, au voisinage de l'une de ses extrémités, et débouchant du côté aval sur la chambre de refroidissement. Du côté amont, ces orifices sont précédés d'une zone d'entrée annulaire en forme de gorge, de révolution par rapport à l'axe de rotation. Ce dispositif comprend également une boîte annulaire, non rotative, de révolution par rapport à l'axe de rotation qui entoure la paroi extérieure au voisinage de la zone d'entrée annulaire et qui est reliée à une arrivée de fluide sous pression par au moins un orifice d'alimentation; deux tuyères annulaires, de révolution par rapport à l'axe de rotation, sont solidaires de la boîte et en communication avec celle-ci par leurs orifices d'entrée annulaires. Chacune comporte un orifice annulaire de sortie qui débouche dans un passage annulaire compris entre la paroi extérieure de la chambre de refroidissement et au moins un élément de paroi, non rotatif, solidaire de la boîte annulaire. L'extrémité amont de chacun de ces deux passages annulaires est en communication avec l'espace extérieur, tandis que l'extrémité aval est en communication avec la zone d'entrée annulaire en forme de gorge. Les orifices des tuyères sont disposés de façon telle que la lame annulaire de fluide qui débouche de la tuyère est orientée en direction de l'extrémité aval du passage annulaire. La pression de fluide dans la boîte est ajustée de façon que la vitesse de déplacement de la lame annulaire de fluide, au débouché de chacune des tuyères, soit au moins de 25 m/s. La chambre de refroidissement comporte, à l'extrémité opposée à celle où se trouvent les orifices d'entrée de fluide, au moins un orifice de sortie. De préférence, la section totale de cet ou de ces orifice(s) de sortie est déterminée de façon que la pression de fluide, dans la chambre de refroidissement, au voisinage des orifices d'entrée de fluide, soit d'environ 0,5 à 1,5 bars relatifs. Avantageusement, des moyens de collecte de fluide sont disposés de façon a recueillir celui-ci au voisinage du ou des orifice(s) de sortie. Avantageusement, la largeur (e1) de l'orifice de sortie de chacune des tuyères, dans sa partie la plus étroite, est comprise entre 0,6 mm et 1 mm. Avantageusement également, la largeur (e2) du passage annulaire, en aval du débouché de la tuyère et dans sa partie la plus étroite, est telle que $e1 \leqq e2 \leqq 1,5\ e1$. Avantageusement également, la largeur (e3) du passage annulaire, en amont du débouché de la tuyère, est au plus égale à (e2). La longueur (L1) du passage annulaire en aval du débouché de chaque tuyère est avantageusement telle que $L1 \geqq 5.e2$ et, de préférence, telle quel $L1 \geqq 8.e2$. Avantageusement, au niveau de chaque passage annulaire, au moins en aval du débouché de chaque tuyère, la surface extérieure de la paroi extérieure de la chambre de refroidissement est cylindrique de révolution et il en est de même pour la surface en regard de la paroi non rotative solidaire de la boîte annulaire. Avantageusement, cette surface de la paroi non rotative est prolongée en aval de chaque passage annulaire par une zone incurvée qui infléchit le parcours du fluide en direction de la zone d'entrée annulaire en forme de gorge.

Il est possible de combiner le mouvement de rotation du moule avec un déplacement alternatif parallèlement à son axe. Dans le cas où l'ensemble fourni par la boîte annulaire et les tuyères demeure fixe, il convient d'accroître la longueur (L1) d'une quantité égale à la moitié de l'amplitude de déplacement alternatif.

La partie supérieure de la paroi extérieure de la chambre de refroidissement peut être démontable pour faciliter la mise en place de la boîte annulaire et des tuyères. De même, la boîte annulaire peut aussi être démontable.

L'invention concerne aussi un procédé pour l'introduction d'un fluide dans une chambre de refroidissement annulaire d'un moule rotatif, pour la coulée de liquides à température élevée tels que les aciers, dans lequel la paroi extérieure de cette chambre comporte des orifices d'entrée d'un fluide et des orifices de sortie de ce fluide.

On projette, dans une zone d'entrée annulaire formée dans la paroi extérieure en amont des orifices d'entrée de fluide dans la chambre de refroidissement, à partir d'un orifice annulaire une lame annulaire d'un fluide de refroidissement la vitesse de déplacement à la sortie de l'orifice annulaire étant d'au moins 25 m/s, la lame annulaire passant par un passage annulaire dont l'une des parois au moins est mobile en rotation par rapport à cet orifice ce passage étant en amont en communication avec l'espace extérieur de l'orifice et en aval en communication avec ladite zone d'entrée annulaire.

De préférence, le passage annulaire a une largeur au moins égale à celle de l'orifice annulaire et pas supérieure à une fois et demie cette dernière. Ce passage a une longueur au moins égale à 5 fois sa propre largeur et plutôt 8 fois.

La section des orifices de sortie de fluide de la chambre de refroidissement et le débit d'au moins une lame annulaire de fluide sont ajustés de façon que, dans la chambre annulaire, au voisinage des orifices d'entrée, la pression de fluide soit d'environ 0,5 à 1,6 bars relatifs.

Le procédé s'applique en particulier à la coulée continue de métaux ou alliages tels que par exemple des aciers.

On utilise le plus souvent comme fluide de refroidissement de l'eau additionnée ou non d'additifs convenables.

L'exemple et les figures ci-après décrivent, de façon non limitative, un mode de réalisation du dispositif suivant l'invention.

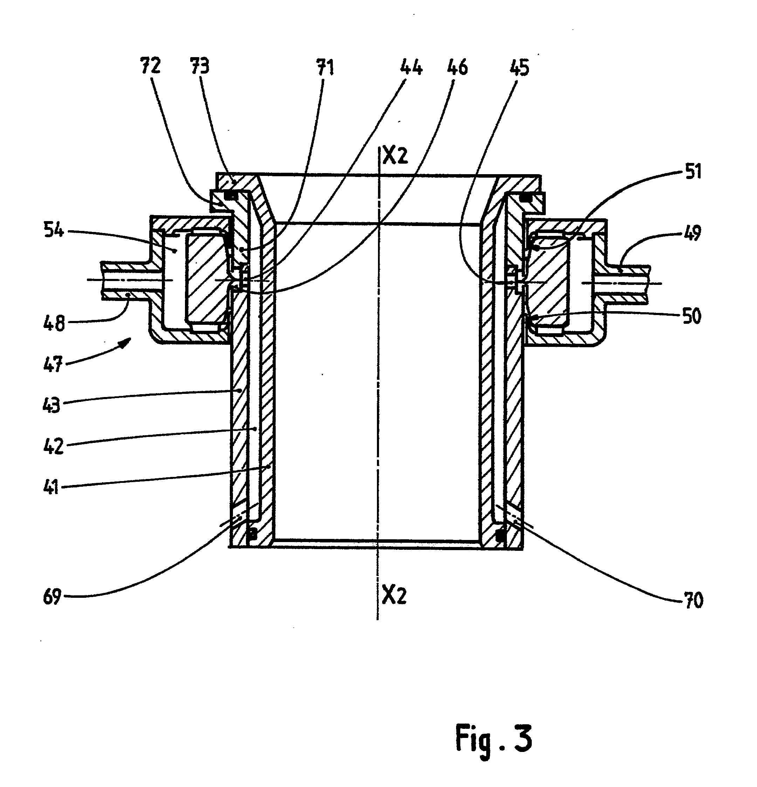

La figure 3 est une vue en élévation et en coupe d'un dispositif suivant l'invention.

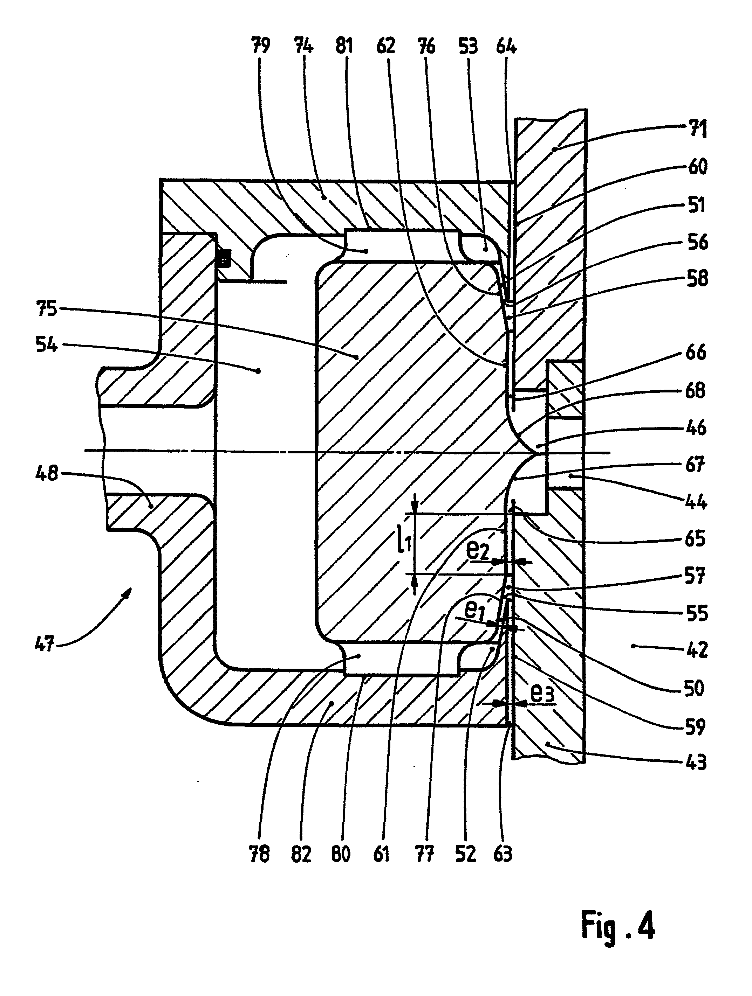

La figure 4 est une vue agrandie de la partie gauche de la figure 3 au niveau des moyens d'introduction de fluide.

Le dispositif suivant l'invention, représenté aux figures 3 et 4, comprend un moule rotatif (41), de section circulaire, qui tourne autour d'un axe (X2–X2) grâce à des paliers de type connu, non représentés, supportés de façon connue par une structure fixe non représentée. Ce moule est entouré d'une chambre annulaire de refroidissement (42) dont la paroi extérieure (43) cylindrique, de révolution, comporte des orifices d'entrée de fluide tels que (44, 45) répartis suivant une circonférence au voisinage de son extrémité supérieure. Ces orifices débouchent du côté aval sur la chambre de refroidissement (42). Du côté amont, ils sont précédés d'une zone d'entrée annulaire (46), en forme de gorge, de révolution par rapport à l'axe (X2–X2). Une boîte annulaire (47), non rotative, de révolution par rapport à l'axe (X2–X2), montée de façon connue sur un support non représenté, entoure la paroi extérieure (43) au voisinage de la zone d'entrée annulaire. Elle est reliée à une arrivée d'un fluide de refroidissement sous pression, tel que, par exemple, de l'eau, par deux orifices d'alimentation (48, 49). Deux tuyères annulaires (50,51) de mêmes dimensions, de révolution par rapport à l'axe (X2–X2), sont solidaires de cette boîte ; leurs orifices annulaires d'entrée (52, 53) sont en communication avec son volume intérieur (54) tandis que leurs orifices annulaires de sortie (55, 56) débouchent chacun dans un passage annulaire (57,58) compris entre la paroi extérieure (43) en rotation de la chambre de refroidissement (59, 60) et des éléments de paroi non rotatifs (61, 62) solidaires de la boîte annulaire. Chaque passage annulaire (57, 58) est en communication par son extrémité amont (63, 64) avec l'espace extérieur et par son extrémité aval (65, 66) avec la zone d'entrée annulaire (46). Les orifices de sortie des tuyères (55, 56) sont orientés de façon que la lame annulaire de fluide issue de chaque tuyère traverse le passage annulaire correspondant en direction de son extrémité aval. De préférence, chaque tuyère est inclinée par rapport au passage annulaire correspondant d'un angle ne dépassant pas 15 degrés. Au-delà de l'extrémité aval (65, 66) de chaque passage annulaire, la paroi non rotative comporte une zone incurvée (67, 68) qui oriente le parcours du fluide en direction de la zone d'entrée annulaire (46). La chambre de refroidissement (42) comporte deux orifices de sortie de fluide (69, 70) au voisinage de son extrémité inférieure. Des moyens de collecte non représentés, tels qu'une goutière annulaire, permettent de recueillir le fluide issu de ces orifices et de l'évacuer. La section totale de ces orifices de sortie (69, 70) est inférieure à la section totale des orifices d'entrée tels que (44, 45), de façon à obtenir dans le haut de la chambre de refroidissement (42), au voisinage de ces orifices d'entrée, une pression de fluide d'environ 0,5 à 1,5 bars relatifs.

Dans ces conditions, la zone d'entrée annulaire (46) est, en régime normal, remplie de fluide. Pour empêcher le refoulement du fluide en direction de l'extrémité amont de chacun des passages, les dimensions de ceux-ci, la section de la tuyère et la vitesse de déplacement de la lame de fluide doivent être ajustées convenablement. Dans le cas du présent exemple, la largeur (e1) de l'orifice de chaque tuyère, dans sa zone la plus étroite, est de 0,8 mm. La largeur (e2) du passage annulaire en aval du débouché de la tuyère est de 1 mm sur une longueur (L1) de 10 mm. Enfin, la largeur (e3) du passage annulaire en amont du débouché de la tuyère est de 0,8mm. Dans ces conditions, en établissement dans le volume intérieur (54) de la boîte annulaire (47) une pression de 3 à 5 bars relatifs, on obtient, au débouché de chaque tuyère (55, 56), une vitesse de la lame de fluide supérieure à 25 m/s qui permet d'alimenter la chambre de refroidissement dans les conditions voulues tout en permettant de contrôler le refoulement de fluide à travers les passages annulaires en direction de leurs extrémités amount (63, 64).

Le dispositif permet, si nécessaire, de combiner avec le mouvement de rotation du moule (41), un déplacement alternatif parallèlement à l'axe (X2–X2). On constate alors un glissement suivant cet axe de la paroi mobile du passage annulaire par rapport à la paroi non rotative. Il faut alors donner à ce passage annulaire une longueur moyenne (L1) accrue d'une valeur correspondant à la moitié de l'amplitude de déplacement alternatif. Si l'amplitude de ce mouvement d'oscillation est par exemple de 10 mm, on majorera la longueur (L1) de 5 mm, ce qui portera (L1), dans le cas du présent exemple, à 15 mm. On pourrait aussi, au lieu de majorer cette longueur, donner à l'ensemble, boîte annulaire et tuyères, un mouvement alternatif synchronisé avec celui du moule et de même amplitude.

Pour permettre la mise en place de l'ensemble formé par la boîte annulaire (47) et les tuyères (50, 51) autour de la paroi extérieure (43) de la chambre de refroidissement, la patie supérieure (71) de celle-ci, comprenant la bride (72) sur laquelle vient en appui la bride (73) du moule (41) est démontable. Elle est assemblée par emboîtage avec la partie inférieure, au niveau de la zone d'entrée annulaire, comme on le voit figure 4. Des moyens connues d'étanchéité et de liaison, non représentés, solidarisent entre elles ces deux parties de la paroi extérieure de façon étanche. De même, la boîte annulaire (47) comporte un couvercle annulaire (74), démontable, qui permet la mise en place et le remplacement de la pièce annulaire (75) qui forme les éléments de paroi non rotatifs (61, 62) des passages annulaires (57, 58) en aval des tuyères, ainsi que les prolongements incurvés (67, 68) de ces éléments de paroi. Cette pièce (75) forme aussi l'une des deux parois (76, 77) de chaque tuyère (50, 51). Elle est maintenue à l'intérieur de la boîte par des reliefs tels que (78, 79) répartis annulairement, de faible épaisseur, et orientés radialement de façon à ne pas perturber l'alimentation en fluide des tuyères. Ces reliefs s'engagent dans des logements tels que (80,81) ménagés dans la paroi inférieure (82) et dans le couvercle (74) de la boîte (47). Le couvercle est solidarisé avec la boîte, de façon étanche, par des moyens connus et non représentés.

De très nombreuses modifications peuvent être apportées au dispositif suivant l'invention qui ne sortent pas du domaine de celle-ci. En particulier, les moyens d'introduction de fluide comprenant les tuyères, l'agencement des passages annulaires, les orifices d'entrée de fluide, la zone d'entrée annulaire peuvent faire l'objet d'adaptations nombreuses. Le fluide utilisé peut être de l'eau avec ou sans additifs, ou d'autres fluides. Les caractéristiques des tuyères, les jeux entre parties fixed et mobiles, peuvent aussi faire l'object de nombreuses adaptations, en particulier en fonction des fluides utilisés.

L'invention concerne aussi tout procédé de coulée en moule rotatif de liquides à température élevée dans lequel on introduit un fluide de refroidissement dans une chambre annulaire de refroidissement disposée autour du moule. Le procédé s'applique en particulier à la coulée continue des métaux ou alliages tels que par exemple les aciers.

## Revendications

1. Dispositif pour l'introduction d'un fluide dans la chambre de refroidissement (42) d'un moule rotatif (41) utilisé pour la coulée de métaux liquides portés à température élevée tels que les aciers, cette chambre de refroidissement (42) étant formée par l'espace annulaire (42) compris entre la paroi du moule (41) et une paroi extérieure (43) qui l'entoure, laquelle comporte des orifices d'entrée (44, 45) du fluide de refroidissement répartis sur une circonférence dont l'axe correspond à l'axe de rotation (X2–X2) du moule et au moins un orifice de sortie (69) de ce fluide, caractérisé en ce qu'il comprend une boîte annulaire (47), non rotative, reliée à une arrivée d'un fluide sous pression, ladite boîte entourant la paroi extérieure (43) au voisinage des orifices d'entrée du fluide (44, 45) dans la chambre de refroidissement (42), orifices qui sont prédédés du côté amont par une zone d'entrée annulaire (46) en forme de gorge, cette boîte comprenant deux tuyères (50, 51) annulaires, chacune de ces tuyères ayant un orifice de sortie de fluide (55, 56) qui débouche dans un passage annulaire (57, 58) compris entre la parois extérieure de la chambre de refroidissement (43) et au moins une paroi non rotative (61, 62) solidaire de la boîte annulaire (47), l'éxtrémité amont (63, 64) de ce passage (57, 58) étant en communication avec l'espace extérieur et l'extrémité aval étant en communication avec la zone d'entrée annulaire (46), les orifices de sortie des tuyères étant orientés de façon que la lame de fluide qui en débouche parcoure le passage annulaire (57, 58) en direction de son extrémité aval.

2. Dispositif suivant revendication 1 caractérisé en ce que la pression de fluide dans la boîte annulaire est ajustée de façon que la vitesse de déplacement de la lame annulaire de fluide au débouché de chacune des tuyères soit au moins de 25 m/s.

3. Dispositif suivant revendication 1 ou 2 caractérisé en ce que la largeur (e1) de l'orifice de sortie de chacune des tuyères, dans sa partie la plus étroite, est compris entre 0,6 et 1 mm, la largeur (e2) du passage annulaire correspondant, en aval du débouche de la tuyère, dans sa partie la plus étroite, étant telle que e1 ≤ e2 ≤ 1,5 e1.

4. Dispositif suivant l'une des revendications 1 à 3 caractérisé en ce que la largeur (e3) du passage annulaire, en amont du débouché de la tuyère, dans sa partie la plus étroite, est au plus égale à (e2).

5. Dispositif suivant l'une des revendications 1 à 4 caractérisé en ce que la longueur (L1) du passage annulaire en aval de chaque tuyère est telle que L1 ≤ 5 · e2.

6. Dispositif suivant l'une des revendications 1 à 5 caractérisé en ce que la paroi non rotative de chaque passage annulaire, en aval du débouché de la tuyère correspondante, est prolongée vers l'aval par une zone incurvée (67, 68) qui infléchit le parcours du fluide en direction de la zone d'entrée annulaire.

7. Procédé pour l'introduction d'un fluide dans une chambre de refroidissement annulaire (42) d'un moule rotatif (41), pour la coulée de métaux liquides à température élevée tels que les aciers, dans lequel la paroi extérieure (43) de cette chambre (42) comporte des orifices d'entrée (44, 45) d'un fluide et des orifices de sortie (69, 70) de ce fluide caractérisé en ce qu'on projette, dans une zone d'entrée annulaire (46) formée dans la paroi extérieure (43) en amont des orifices d'entrée de fluide (44, 45) dans la chambre de refroidissement (42), à partir d'un orifice annulaire (55, 56) une lame annulaire d'un fluide de refroidissement la vitesse de déplacement à la sortie de l'orifice annulaire (55, 56) étant d'au moins 25 m/s, la lame annulaire passant par un passage annulaire (57, 58) dont l'une des parois (43) au moins est mobile en rotation par rapport à cet orifice (55, 56) ce passage (57, 58) étant en amont en communication avec l'espace extérieur de l'orifice et en aval en communication avec ladite zone d'entrée annulaire (46).

8. Procédé suivant revendication 7 caractérisé en ce qu'on ajuste le débit de fluide introduit sous forme d'une lame annulaire dans un passage annulaire (57, 58) ainsi que la section totale des orifices de sortie (69) de fluide de la chambre de refroidissement annulaire (42), de façon que la pression dans cette chambre de refroidissement (42), au voisinage des orifices d'entrée de fluide (44, 45), soit d'environ 0,5 à 1,5 bars relatifs.

9. Procédé suivant la revendication 8 caractérisé en ce que le fluide de refroidissement est de l'eau.

10. Procédé suivant l'une des revendications 7 à 9 caractérisé en ce que le passage annulaire (57, 58) en aval de l'orifice annulaire d'introduction de fluide (55, 56) a une largeur (e2) au moins égale à celle de cet orifice annulaire (e1) et pas supérieure à une fois et demie cette largeur, et une longueur (L1) au moins égale à cinq fois sa propre largeur (e2).

**Patentansprüche**

1. Vorrichtung zum Einleiten einer Flüssigkeit in die Kühlkammer (42) einer Drehkokille (41), die für das Gießen von flüssigen Metallen verwendet wird, die auf eine erhöhte Temperatur gebracht werden, wie beispielsweise Stähle, wobei diese Kühlkammer (42) durch einen ringförmigen Raum (42) gebildet ist, der sich zwischen der Seitenwand der Kokille (41) und einer äußeren Seitenwand (43) befindet, die sie umgibt, wobei jene Eingangsöffnungen (44, 45) für die Kühlflüssigkeit aufweist, die auf einem Umfang verteilt angeordnet sind, dessen Achse der Rotationsachse (X2–X2) der Kokille entspricht, und wenigstens eine Ausgangöffnung (69) der Flüssigkeit aufweist, dadurch gekennzeichnet, daß sie ein ringförmiges Gehäuse (47), nicht-drehend, aufweist, das mit einem Eingang einer Druckflüssigkeit verbunden ist, wobei das Gehäuse, das die äußere Seitenwand (43) in der Nähe der Eingangsöffnungen der Flüssigkeit (44, 45) in die Kühlkammer (42) umgibt, Öffnungen, von denen stromauf eine ringförmige Eintrittszone (46) in Form einer Rinne vorgesehen ist, wobei dieses Gehäuse zwei ringförmige Kanäle oder Rohre (50, 51) aufweist, wobei jedes dieser Rohre eine Ausgangsöffnung der Flüssigkeit (55, 56) aufweist, die in einen ringförmigen Kanal (57, 58) mündet, der zwischen der äußeren Seitenwand (43) der Kühlkammer und wenigstens einer nicht-drehenden Seitenwand (61, 62) vorgesehen ist, die mit dem ringförmigen Gehäuse (47) verbunden ist, wobei das obere Ende (63, 64) dieses Kanals (57, 58) in Verbindung steht mit dem Außenraum und das untere Ende in Verbindung steht mit der ringförmigen Eintrittzone (46), wobei die Ausgangsöffnungen der Rohre derart ausgerichtet sind, daß der Flüssigkeitsstreifen der darin mündet, den ringförmigen Kanal (57, 58) in Richtung seines unteren Endes durchläuft.

2. Vorrichtung nach Anspruch 1, dadurch gekennzeichnet, daß der Flüssigkeitsdruck in dem ringförmigen Gehäuse derart eingestellt ist, daß die Bewegungsgeschwindigkeit des ringförmigen Flüssigkeitsstreifens an der Mündung eines jeden Rohres wenigstens 25 m/s beträgt.

3. Vorrichtung nach Anspruch 1 oder 2, dadurch gekennzeichnet, daß die Breite (e1) der Ausgangsöffnung eines jeden Rohres in seinem engsten Bereich zwischen 0,6 und 1 mm liegt, die Breite (e2) des ringförmigen entsprechenden Kanals unterhalb der Mündung des Rohres in seinem engsten Bereich so ist, daß $e1 \leq e2 \leq 1,5\ e1$.

4. Vorrichtung nach einem der Ansprüche 1 bis 3, dadurch gekennzeichnet, daß die Breite (e3) des ringförmigen Kanals oberhalb der Mündung des Rohres in seinem engsten Bereich höchstens gleich (e2) ist.

5. Vorrichtung nach einem der Ansprüche 1 bis 4, dadurch gekennzeichnet, daß die Länge (L1) des ringförmigen Kanals unterhalb eines jeden Rohres gleich groß $L1 \leq 5 \cdot e2$ ist.

6. Vorrichtung nach einem der Ansprüche 1 bis 5, dadurch gekennzeichnet, daß die nicht-drehende Seitenwand eines jeden ringförmigen Kanals unterhalb der Mündung des entsprechenden Rohres stromab durch eine gebogene Zone (67, 68) verlängert ist, die den Flüssigkeitsverlauf in Richtung der ringförmigen Eintrittszone knickt.

7. Verfahren zum Einleiten einer Flüssigkeit in eine ringförmige Kühlkammer (42) einer Drehkokille (41) für das Gießen von flüssigem Metall bei erhöhter Temperatur, wie beispielsweise von Stählen, bei dem die äußere Seitenwand (43) dieser Kammer (42) Eingangsöffnungen (44, 45) einer Flüssigkeit und Ausgangsöffnungen (69, 70) dieser Flüssigkeit aufweist, dadurch gekennzeichnet, daß in eine ringförmige Eintrittszone (46), die in der äußeren Seitenwand (43) oberhalb der Eingangsöffnungen der Flüssigkeit (44, 45) in der Kühlkammer (42) ausgebildet ist, ausgehend von einer ringförmigen Öffnung (55, 56) ein ringförmiger Streifen einer Kühlflüssigkeit eingespritzt wird, wobei die Geschwindigkeit am Ausgang der ringförmigen Öffnung (55, 56) wenigstens 25 m/s beträgt, wobei der ringförmige Streifen durch einen ringförmigen Kanal (57, 58) hindurchtritt, von dem wenigstens eine der Seitenwände (43) drehbeweglich bezüglich dieser Öffnung (55, 56) ist, wobei dieser Kanal (57, 58) oberhalb in Verbindung mit dem Außenraum der Öffnung und unterhalb in Verbindung mit der genannten ringförmigen Eintrittszone (46) ist.

8. Verfahren nach Anspruch 7, dadurch gekennzeichnet, daß die Rate der Flüssigkeit eingestellt wird, die in Form eines ringförmigen Streifens in einen ringförmigen Kanal (57, 58) eingeführt wird, sowie der Gesamtquerschnitt der Ausgangsöffnungen (69) der Flüssigkeit der ringförmigen Kühlkammer (42) derart eingestellt wird, daß der Druck in dieser Kühlkammer (42) in der Nähe der Eingangsöffnungen der Flüssigkeit (44, 45) ungefähr 0,5 bis 1,5 bar relativ beträgt.

9. Verfahren nach Anspruch 8, dadurch gekennzeichnet, daß die Kühlflüssigkeit Wasser ist.

10. Verfahren nach einem der Ansprüche 7 bis 9, dadurch gekennzeichnet, daß der ringförmige Kanal (57, 58) unterhalb der ringförmigen Einführöffnung der Flüssigkeit (55, 56) eine Breite (e2) aufweist, die wenigstens gleich jener dieser ringförmigen Öffnung (e1) und nicht größer ist als eineinhalb mal diese Breite, une eine Länge (L1) aufweist, die wenigstens gleich dem Fünffachen seiner eigenen Breite (e2) ist.

**Claims**

1. A device permitting introduction of a fluid into the cooling chamber (42) of a rotary mould (41) used for casting liquid metals such as steels which are raised to high temperatures, the said cooling chamber (42) being formed by the annular space (42) comprised between the wall of the mould (41) and an outer wall (43) which surrounds it, in which there are cooling fluid inlet apertures (44, 45) distributed over a circumference, the axis of which corresponds to the axis of rotation (X2–X2) of the mould and at least one outlet orifice (69) for the said fluid, characterised in that it comprises a non-rotatable annular box (47) connected to a pressurised fluid supply, the said box surrounding the outer wall (43) in the vicinity of the fluid inlet apertures (44, 45) which provide access to the cooling chamber (42), apertures which are preceded on the upstream side by a throat-shaped annular inlet zone (46), the said box comprising two annular nozzles (50, 51) each of these nozzles having a fluid outlet orifice (55, 56) which discharges into an annular passage (57, 58) comprised between the outside wall of the cooling chamber (43) and at least one non-rotating wall (61, 62) rigid with the annular box (47), the upstream end (63, 64) of this passage (57, 58) communicating with the annular inlet zone (46), the outlet orifices of the nozzles being so orientated that the sheet of fluid which is discharged therefrom passes through the annular passage (57, 58) in the direction of its downstream end.

2. Device according to Claim 1, characterised in that the fluid pressure in the annular box is so adjusted that the displacement velocity of the annular sheet of fluid at the outlet from each of the nozzles is at least 25 m/s.

3. Device according to Claim 1 or 2, characterised in that the width (e1) of the outlet orifice of each of the nozzles, in its narrowest part, is comprised between 0.6 and 1 mm, the width (e2) of the corresponding annular passage downstream of the mouth of the nozzle, in its narrowest part, being such that $e1 \leq e2 \leq 1.5\ e1$

4. Device according to one of Claims 1 to 3, characterised in that the width (e3) of the annular passage upstream of the mouth of the nozzle, in its narrowest part, is at most equal to (e2).

5. Device according to one of Claims 1 to 4, characterised in that the length (L1) of the annular passage downstream of each nozzle is such that $L1 \leq 5 \cdot e2$.

6. Device according to one of Claims 1 to 5, characterised in that the non-rotatable wall of each annular passage, downstream of the mouth of the corresponding nozzle, is extended in the downstream direction by an incurvate zone (67, 68) which directs the path of the fluid towards the annular inlet zone.

7. Method of introducing a fluid into an annular cooling chamber (42) of a rotary mould (41) for the casting of liquid metals such as steels at high temperature, in which the outside wall (43) of the said chamber (42) comprises fluid inlet apertures (44, 45) and fluid outlet orifices (69, 70), characterised in that an annular sheet of a cooling fluid is projected from an annular orifice (55, 56) into an annular inlet zone (46) formed in the outside wall (43) upstream of the apertures (44, 45) through which the fluid enters the cooling chamber (42), the velocity of displacement at the outlet from the annular orifice (55, 56) being at least 25 m/s, the annular sheet passing through an annular passage (57, 58) of which at least one of the walls (43) is adapted for rotary movement in relation to this orifice (55, 56), the said passage (57, 58) being upstream in communication with the space outside the orifice and on the downstream side in communication with the said annular inlet zone (46).

8. Method according to Claim 7, characterised in that the rate of fluid introduced in the form of an annular sheet or stream into an annular passage (57, 58) and also the total cross-section of the orifices (69) provided for the discharge of fluid from the annular cooling chamber (42) are adjusted so that the pressure in this cooling chamber (42) is approx. 0.5 to 1.5 bars relative pressure in the vicinity of the fluid inlet apertures (44, 45).

9. Method according to Claim 8, characterised in that the cooling fluid is water.

10. Method according to one of Claims 7 to 9, characterised in that the annular passage (57, 58) downstream the annular fluid inlet orifice (55, 56) has a width (E2) at least equal to the width of this annular orifice (E1) and not bigger than one and a half this width, and a length (L1) at least equal to five times its own width (E2).

Fig. 2

Fig. 1

Fig. 3

Fig . 4